# EUROPÄISCHE PATENTSCHRIFT

(11) **EP 3 056 705 B1**
(45) Veröffentlichungstag und Bekanntmachung des Hinweises auf die Patenterteilung: **14.03.2018**
(21) Anmeldenummer: 16153079.5
(22) Anmeldetag: 28.01.2016
(51) Int. Cl.: F01N 3/30, F01N 3/32, F01N 3/34, F01N 3/021

(54) **TURBO-AUFGELADENE BRENNKRAFTMASCHINE MIT EINEM FREMDGEZÜNDETEN VERBRENNUNGSMOTOR UND VERFAHREN ZUM BETREIBEN EINER DERARTIGEN BRENNKRAFTMASCHINE**
TURBOCHARGED COMBUSTION ENGINE WITH AN EXTERNALLY IGNITED COMBUSTION MOTOR AND METHOD FOR OPERATING SUCH A COMBUSTION ENGINE
MOTEUR À COMBUSTION INTERNE TURBO-CHARGÉ À ALLUMAGE COMMANDÉ ET PROCÉDÉ DE FONCTIONNEMENT D'UN TEL MOTEUR À COMBUSTION

(30) Priorität: 10.02.2015 DE 102015202323
(43) Veröffentlichungstag der Anmeldung: 17.08.2016
(73) Patentinhaber: Volkswagen Aktiengesellschaft, 38440 Wolfsburg (DE)
(72) Erfinder: Thiele, Michael, 38477 Jembke (DE); Oppermann, Ralf, 38110 Braunschweig (DE); Hagelstein, Dirk, 38110 Braunschweig (DE)

(56) Entgegenhaltungen:
- EP-A1- 2 309 102
- EP-A2- 1 550 797
- JP-A- 2006 233 803
- US-A- 5 724 810

## Beschreibung

Die Erfindung betrifft eine aufladbare Brennkraftmaschine mit einem fremdgezündeten Verbrennungsmotor mit den Merkmalen gemäß dem Oberbegriff des Anspruchs 1. Des Weiteren betrifft die Erfindung ein Verfahren zum Betreiben einer aufladbaren Brennkraftmaschine mit einem fremdgezündeten Verbrennungsmotor mit den Merkmalen gemäß dem Oberbegriff des Anspruchs 5.

Bei Verbrennungsprozessen in einer Brennkraftmaschine, insbesondere einer fremdgezündeten Brennkraftmaschine, entstehen Rußpartikel, welche von einem in der Abgasanlage der Brennkraftmaschine angeordneten Partikelfilter, insbesondere Ottopartikelfilter, im Fahrbetrieb aus dem Abgas abgesondert werden. Damit der Abgasgegendruck vor dem Partikelfilter nicht zu weit ansteigt, wird der Partikelfilter kontinuierlich oder periodisch regeneriert, das heißt, die Rußbeladung des Partikelfilters wird reduziert, indem Reaktionsbedingungen für eine thermische Oxidation des Rußes mit Sauerstoff geschaffen werden. Zu diesem Zweck ist eine ausreichend hohe Temperatur im Partikelfilter bei gleichzeitigem Angebot von Sauerstoff im Abgas notwendig.

Da moderne fremdgezündete Brennkraftmaschinen regelmäßig ohne Sauerstoffüberschuss betrieben werden - Lambda gleich 1, stöchiometrisch - beziehungsweise gute Wirkungsgrade aufweisen, ist eine gesonderte Vorgehensweise für die Regeneration, ein spezieller Fahrzyklus, erforderlich. Zur Regeneration wird eine Temperatur von mehr als 500 Grad Celsius im Partikelfilter benötigt, deren Darstellung insbesondere bei einer Anordnung des Partikelfilters im Unterboden eine große Herausforderung darstellt.

Aus dem Dokument DE 10 2012 022 153 A1 ist bekannt, zur Regeneration eines mit Rußpartikeln beladenen Partikelfilters eines Ottomotors die Temperatur in der Abgasanlage, insbesondere im Partikelfilter, über eine vorbestimmte Mindesttemperatur anzuheben, indem die Zündwinkel des Ottomotors nach spät verstellt werden oder eine Kraftstoffzufuhr eines Zylinders bei gleichzeitigem Absenken des Lambda-Wertes eines anderen Zylinders abgeschaltet wird.

Um Sauerstoff in die Abgasanlage mit Partikelfilter einer mittels eines Abgasturboladers aufladbaren fremdgezündeten Brennkraftmaschine einzubringen, ist es zum Beispiel aus den Dokumenten DE 10 2011 118 337 A1 und DE 10 2009 046 559 A1 bekannt, unmittelbar vor dem Partikelfilter einen Teil der Ladeluft einzubringen. Zu diesem Zweck ist eine aus der Ladeluftleitung stromab des Verdichters abzweigende schaltbare Luftleitung vorgesehen, welche stromab der Turbine und gegebenenfalls stromab von Katalysatorelementen in die Abgasanlage mündet, so dass bei ausreichendem Ladedruck in der Ladeluftleitung ein Teil der Ladeluft direkt in die Abgasanlage gelangt. Der Strom durch die Luftleitung kann variabel steuerbar, insbesondere absperrbar, mittels eines Ventils sein.

Des Weiteren geht aus dem Dokument DE 103 50 485 A1 eine mittels eines elektrischen Laders aufladbare Brennkraftmaschine mit einer Reinigungseinrichtung, insbesondere einem Partikelfilter, in der Abgasanlage hervor, in welcher ein Teil der verdichteten Ladeluft über eine aus der Ladeluftleitung abzweigende Luftleitung vor der zu regenerierenden Reinigungseinrichtung in der Abgasanlage eingeleitet wird. Durch die Steuerbarkeit und die Schaltbarkeit des elektrischen Laders kann der zusätzliche Luftbedarf während der Regenerationsphase auf einfache Art und Weise eingestellt werden.

Aus dem Dokument EP 2 309 102 A1 gehen ein Verfahren und eine Vorrichtung zur Regeneration eines Partikelfilters eines mit einem Turbolader aufladbaren Verbrennungsmotors mit einem Frischgasstrang und einer Abgasanlage mit dem Partikelfilter hervor. Aus dem Frischgasstrang wird stromab eines Verdichters des Turboladers Sekundärluft abgezweigt und stromauf einer Turbine des Turboladers in die Abgasanlage eingeleitet.

Das Dokument JP 2006 233 803 A betrifft das Einleiten von Sekundärluft in die Abgasanlage einen aufladbaren Verbrennungsmotor im Zusammenhang der Regeneration eines Partikelfilters. Stromab eines Verdichters eines Turboladers im Frischgasstrang des Verbrennungsmotors abgezweigte Sekundärluft gelangt in einen Abgaskrümmer der Abgasanlage. Im Abgaskrümmer befindet sich ein Kraftstoffinjektor. Die Sekundärluft wird in der Nähe der Einspritzdüse des Injektors in den Abgaskrümmer eingebracht, so dass die Abgasanlage mittels zusätzlicher Verbrennung erhöht werden kann, um den Partikelfilter zu regenerieren.

Schließlich werden im Dokument EP 1 550 797 A2 ein Verfahren und eine Vorrichtung zur Regelung eines Sekundärluftstroms bei einer Verbrennungskraftmaschine beschrieben. Die Sekundärluftleitung mündet an verschiedenen Mündungsstellen in die Abgasanlage, zum einen an mehreren Stellen stromauf eines Katalysators und zum anderen stromab des Katalysators, dabei stromauf eines Speicherkatalysators.

Es hat sich herausgestellt, dass die bekannten Lösungsansätze nicht sicher sind, um auch in Fahrzyklen mit schwacher Last Temperaturen von größer als 500 Grad Celsius im Partikelfilter, insbesondere bei einer Anordnung im Unterboden, darzustellen.

Aufgabe der vorliegenden Erfindung ist es, eine Regeneration eines Partikelfilters bei Fahrzyklen mit geringer Last zu ermöglichen.

Diese Aufgabe wird erfindungsgemäß durch eine aufladbare Brennkraftmaschine mit einem fremdgezündeten Verbrennungsmotor mit den Merkmalen gemäß Anspruch 1 gelöst. Vorteilhafte Weiterbildungen der Erfindung sind in den abhängigen Ansprüchen charakterisiert.

Eine erfindungsgemäße aufladbare Brennkraftmaschine umfasst einen fremdgezündeten Verbrennungsmotor, einen Frischgasstrang mit wenigstens einem Verdichter, eine Abgasanlage mit wenigstens einer Turbine und wenigstens einen Partikelfilter, welcher stromab der Turbine angeordnet ist, und einer Sekundärluftleitung, welche stromab des Verdichters vom Frischgasstrang abzweigt und stromauf der Turbine in einen Abgaskrümmer der Abgasanlage an mehrere Mündungsstellen in den Abgaskrümmer der Abgasanlage mündet, wobei der Abgaskrümmer in den Zylinderkopf integriert ist. Erfindungsgemäß weist die aufladbare Brennkraftmaschine eine Steuereinheit auf, die derart ausgebildet ist, dass durch diese ein oder mehrere Zündwinkel und/oder ein oder mehrere Einspritzzeitpunkte des fremdgezündeten Verbrennungsmotors steuerbar oder regelbar sind.

Über die Sekundärluftleitung kann ein Teil der verdichteten Frischgas oder Ladeluft in die Abgasanlage, insbesondere zur Regeneration des Partikelfilters, eingeleitet werden.

Die Turbine und der Verdichter können eine Aufladegruppe eines Abgasturboladers bilden (bevorzugte Ausführung). Der Verdichter kann auch ein elektrischer oder ein mechanischer Verdichter sein, während die Turbine entweder zu einer Aufladegruppe mit einem anderen Verdichter gehört oder einer anderen Baugruppe in der Abgasanlage, zum Beispiel für die Energierückgewinnung, zugeordnet ist.

Der fremdgezündete Verbrennungsmotor kann ein Ottomotor sein. Insbesondere bevorzugt handelt es sich um einen fremdgezündeten Verbrennungsmotor mit Direkteinspritzung in die Brennkammern.

Der erfindungsmäße Aufbau ermöglicht in vorteilhafter Weise eine Entdrosselung der aufladbaren Brennkraftmaschine: Indem über die Sekundärluftleitung ein Teil der Ladeluft vor der Turbine in der Abgasanlage eingeleitet wird, kann die Antriebsleistung des Verdichters erhöht werden, so dass mehr Luft für den Verbrennungsmotor und für die Abgasanlage mittels des Verdichters zur Verfügung gestellt wird. Der zusätzliche Sauerstoff in der Abgasanlage kann zur Freisetzung einer zusätzlichen Wärmeenergie (Exothermie) genutzt werden. Der erfindungsgemäße Aufbau kommt ohne eine zusätzliche Pumpe zur Leitung des Frischgases beziehungsweise der Ladeluft durch die Sekundärluftleitung aus.

Die erfindungsgemäße aufladbare Brennkraftmaschine ist bevorzugt darüber hinaus die Steuereinheit derart ausgebildet, dass durch diese ein Kraftstoff-Luft-Verhältnis des fremdgezündeten Verbrennungsmotors steuerbar oder regelbar sind. Bevorzugt wird die Steuerung oder Regelung derart vorgenommen, dass in der Abgasanlage nach der Beimischung der Ladeluft über die Sekundärluftleitung ein stöchiometrisches Kraftstoff-Luft-Verhältnis erreicht wird.

In erfindungsgemäßer Weise kann eine Temperaturerhöhung in der Abgasanlage erreicht werden, indem eine exotherme Reaktion des Abgases, insbesondere des fetten Abgases, des fremdgezündeten Verbrennungsmotors mit dem über die Sekundärluftleitung zur Verfügung gestellten Sauerstoff in der Abgasanlage stattfindet.

Des Weiteren münden oder enden in der aufladbaren Brennkraftmaschine die Sekundärluftleitung in den Abgaskrümmer der Abgasanlage an mehreren Mündungsstellen. Dabei ist der Abgaskrümmer im Zylinderkopf integriert. Falls es sich um einen im bestimmten Betriebspunkten gekühlten Abgaskrümmer handelt, ist es im Zusammenhang der Erfindung vorteilhaft, beim Einleiten von Ladeluft in die Abgasanlage die Kühlung des Abgases zu verringern oder ganz zu unterlassen. Vorteile einer exothermen Reaktion möglichst weit stromauf in der Abgasanlage bestehen unter anderem darin, dass zusätzliche Abgasenthalpie für die Turbine bereitgestellt wird und dass die Gefahr einer unkontrollierten Verbrennung des insbesondere fetten Abgases in empfindlichen Bauteilen der Abgasanlage, wie beispielsweise Katalysatoren, verringert, bevorzugt vermieden wird.

Zur Ausweitung des nutzbaren Betriebsbereichs mit einem positiven Spülgefälle kann in der Sekundärluftleitung ein Rückschlagventil angeordnet sein. Auf diese Weise wird ein durch die hohe Dynamik bedingtes Rückströmen des Abgases verhindert.

In einer vorteilhaften Weiterbildung ist die Abgasanlage der erfindungsgemäßen aufladbaren Brennkraftmaschine wenigstens teilweise, bevorzugt umfassend thermisch isoliert, zum Beispiel mit Isolierwolle (Isolierflies oder Isoliergewebe) oder mit Luftspaltisolation. Auf diese Weise werden Wärmeverluste aus der Abgasanlage verringert oder vermieden.

Um den Ladedruck zu erhöhen, kann erfindungsgemäß bei einer Turbine mit variabler Geometrie (VTG) die Geometrie für einen Teillastabgasmassenstrom geschaltet werden. Um den Ladedruck zu erhöhen, kann erfindungsgemäß bei einer Turbine mit schaltbarer oder steuerbarer Bypass-Leitung (Wastegate) der Massenstrom durch die Bypassleitung verringert oder ganz unterbrochen werden, indem das Wastegateventil teilweise oder ganz geschlossen wird. Bevorzugt ist eine VTG-Turbine insoweit, als typischerweise im Vergleich zu Wastegate-Turbinen deutlich höhere Turbinenleistungen und folglich Massenströme durch die Sekundärluftleitung erzeugbar sind.

Die aufladbare Brennkraftmaschine kann in einem Fahrzeug, insbesondere einem Landfahrzeug, integriert sein: Das erfindungsgemäße Fahrzeug weist eine aufladbare Brennkraftmaschine mit den Merkmalen oder Merkmalskombinationen gemäß dieser Darstellung auf, wobei der Partikelfilter im Unterboden des Fahrzeugs angeordnet ist. Mit anderen Worten, der Partikelfilter ist motorfern in der Abgasanlage angeordnet. Das Fahrzeug kann insbesondere ein Personenkraftwagen oder ein Nutzfahrzeug sein. Die aufladbare Brennkraftmaschine ist bevorzugt ein Teil des Antriebs des Fahrzeug. Sie kann insbesondere die einzige Antriebsquelle oder Teil eines Hybridantriebs, zum Beispiel in Kombination mit einer oder mehrerer Elektromaschinen, sein.

Die Anordnung des Partikelfilters im Unterboden ist vorteilhaft, um einen möglichst geringen Abgasgegendruck für den fremdgezündeten Verbrennungsmotor erreichen zu können: Es steht mehr Bauraum für den Partikelfilter zur Verfügung, so dass dieser ein größeres Package verglichen zu einem motornahen Einbau, insbesondere im Motorraum, und/oder einen geringeren Volumenstrom aufweisen kann. Erfindungsgemäß kann ausreichend Wärme erzeugt werden, um sogar einen motorfern angeordneten Partikelfilter zu regenerieren.

Im Zusammenhang des erfinderischen Gedankens steht auch ein Verfahren zum Betreiben einer aufladbaren Brennkraftmaschine, insbesondere einer erfindungsgemäßen Brennkraftmaschine. Im erfindungsgemäßen Verfahren wird eine aufladbare Brennkraftmaschine mit einem fremdgezündeten Verbrennungsmotor, einem Frischgasstrang mit wenigstens einem Verdichter, einer Abgasanlage mit wenigstens einer Turbine und wenigstens einem Partikelfilter, welcher stromab der Turbine angeordnet ist, und einer Sekundärluftleitung, welche stromab des Verdichters vom Frischgasstrang abzweigt und stromauf der Turbine in einen Abgaskrümmer der Abgasanlage an einer Mündungsstelle in die Abgasanlage mündet, in welchem die aufladbare Brennkraftmaschine mittels des Verdichters aufgeladen wird, betrieben. Es wird, insbesondere zur Regeneration des Partikelfilters, Sekundärluft, ein Teil des Frischgases oder der Ladeluft, stromauf der Turbine in die Abgasanlage eingeleitet. Erfindungsgemäß werden oder sind ein oder mehrere Zündwinkel und/oder ein oder mehrere Einspritzzeitpunkte im Vergleich zum Betrieb am gleichen Betriebspunkt ohne Sekundärluftzufuhr nach spät verstellt. Und es wird die Sekundärluft an mehreren Mündungspunkten in den Abgaskrümmer, welcher in den Zylinderkopf integriert ist, eingeleitet.

Im Unterschied zu einen selbstzündenden Verbrennungsmotor, insbesondere einem Dieselmotor, wird der Saugrohrdruck/Ladedruck, insbesondere zum Ausgleich des schlechteren Wirkungsgrades bei der Regeneration, und/oder ein Luftmassenstrom im Saugrohr erhöht. Zusätzlich wird noch der Abgasmassenstrom durch den über die Sekundärluftleitung eingeleiteten Teil der Ladeluft erhöht. Bei einem selbstzündenden Verbrennungsmotor werden der Ladedruck und der Luftmassenstrom in der Regenerationsphase abgesenkt.

In einer bevorzugten Ausführungsform des erfindungsgemäßen Verfahrens wird die Brennkraftmaschine, insbesondere während der Regenration des Partikelfilters, in einem Betriebspunkt mit Teilllast und/oder mit einem unterstöchiometrischen Kraftstoff-Luft-Verhältnis betrieben.

Es ist besonders zweckmäßig im erfindungsgemäßen Verfahren, die Temperatur in der Abgasanlage am Partikelfilter auf einen Wert größer als 500 Grad Celsius, insbesondere 560 Grad Celsius, und kleiner als 1100 Grad Celsius, bevorzugt größer als 580 Grad Celsius und kleiner als 1000 Grad Celsius, zu erhöhen. Die Temperatur der Abgasanlage kann gesteuert, optional geregelt sein. Die Steuerung beziehungsweise die Regelung kann von der besagten Steuerungseinheit ausgeführt werden. Sie kann auf einem Modell der Temperatur in der Abgasanlage beruhen.

Im erfindungsgemäßen Verfahren kann die Leistungsabgabe der Turbine und/oder des Verdichters im Vergleich zum Betrieb am gleichen Betriebspunkt ohne Sekundärluftzufuhr erhöht werden. In vorteilhafter Weise ist es mittels des erfindungsgemäßen Verfahrens möglich, eine Regeneration des Partikelfilters in einem Betriebspunkt - insbesondere Fahrpunkt, sofern die Brennkraftmaschine Teil des Antriebs eines Fahrzeug ist - auszuführen, der bereits bei einem ausgedehnten Betrieb der aufladbaren Brennkraftmaschine in Teilllast regelmäßig erreichbar ist. Insbesondere kann es sich um einen Fahrpunkt bei städtischen Geschwindigkeiten handeln, welcher regelmäßig von einem Normalfahrer auch ohne Überlandbetrieb oder Autobahnbetrieb erreichbar ist.

Besonders vorteilhaft und zielführend ist es, im erfindungsgemäßen Verfahren einen Ladedruck und/oder einen Luftmassenstrom zum fremdgezündeten Verbrennungsmotor der aufladbaren Brennkraftmaschine zu erhöhen. Auf diese Weise kann der Wirkungsgrad des Verdichters optimiert werden.

Weitere Vorteile und vorteilhafte Ausführungsformen und Weiterbildungen der Erfindung werden anhand der nachfolgenden Beschreibung unter Bezugnahme auf die Figuren dargestellt. Es zeigt im Einzelnen:
- Figur 1: eine schematische Darstellung der Topologie einer bevorzugten Ausführungsform der erfindungsgemäßen aufladbaren Brennkraftmaschine, und
- Figur 2: ein Ablaufdiagramm einer bevorzugten Ausführungsform des erfindungsgemäßen Verfahrens.

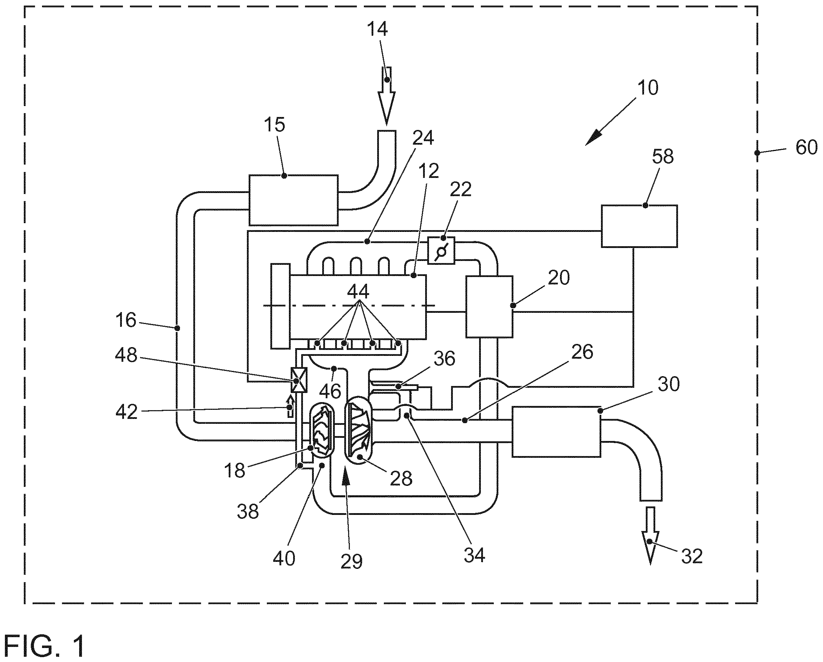

Die Figur 1 ist eine schematische Darstellung der Topologie einer bevorzugten Ausführungsform der erfindungsgemäßen aufladbaren Brennkraftmaschine 10. Die aufladbare Brennkraftmaschine 10 ist das Antriebsaggregat eines Fahrzeugs 60. Sie umfasst einen fremdgezündeten Verbrennungsmotor 12, insbesondere eine Kolbenmaschine, hier beispielhaft mit vier Brennkammern, konkret Zylindern. Frischgas 14 wird nach Passage durch einen Luftfilter 15 über einen Frischgasstrang 16 dem fremdgezündeten Verbrennungsmotor 12 zugeführt. Im Frischgasstrang 16 ist ein Verdichter 18 zur Komprimierung des Frischgases 14 angeordnet. Stromab des Verdichters 18 befindet sich ein Ladeluftkühler 20. Das komprimierte, gekühlte Frischgas 14 gelangt in ein Saugrohr 24, in welchem es aufgeteilt in einzelne Ströme zu den hier beispielhaften vier Brennkammern im fremdgezündeten Verbrennungsmotor 12 gelangt.

Stromab der Brennkammern weist die aufladbare Brennkraftmaschine 10 eine Abgasanlage 26 auf: Das Abgas 32 wird in einem Abgaskrümmer 46 gesammelt und zu einer Turbine 28 geführt. In dieser Ausführungsform bilden der Verdichter 18 und die Turbine 28 eine Turboladergruppe 29. Das heißt, die Turbine 28 treibt den Verdichter 18 an, indem das Abgas 32 entspannt wird. Stromab der Turbine 28 befindet sich in der Abgasanlage 26 ein Partikelfilter 30, insbesondere ein Ottopartikelfiler. Nicht zeichnerisch in der Abgasanlage 26 dargestellt sind weitere Abgasbehandlungskomponenten, insbesondere Katalysatoren, wie Dreiwegekatalysatoren, Speicherkatalysatoren, Oxidationskatalysatoren, Reduktionskatalysatoren und dergleichen, welcher typischerweise in derartigen aufgeladen Brennkraftmaschinen 10 und auch in dieser Ausführungsform vorhanden sind. Der Partikelfilter 30 kann auch selbst eine oder mehrere katalytische Beschichtungen aufweisen. Der Partikelfilter 30 ist im Unterboden des Fahrzeugs 60 angeordnet. Das gereinigte Abgas 32 wird schließlich aus der Abgasanlage 26 in die Umgebung freigesetzt.

In dieser Ausführungsform ist die Turbine 28 eine Wastegate-Turbine. Es existiert eine Bypass-Leitung 34, über welche ein Massenstrom von Abgas 32 an der Turbine vorbeigeleitet werden kann. Die Menge dieses Massenstromes ist steuerbar mittels eines Bypass-Ventils 36.

Erfindungsgemäß weist die aufladbare Brennkraftmaschine 10 eine Sekundärluftleitung 38 zur Zuleitung von Sekundärluft 42 in die Abgasanlage 26 auf. Die Sekundärluftleitung 38 zweigt stromab des Verdichters 18 an einer Abzweigungsstelle 40 vom Frischgasstrang 16 ab. Sie mündet an einer Anzahl von Mündungsstellen 44 in den Abgaskrümmer 46. Die Anzahl von Mündungsstellen ist identisch zur Anzahl der Brennkammern im fremdgezündeten Verbrennungsmotor 12, hier beispielhaft vier Mündungsstellen 44. Auf diese Weise wird die Sekundärluft 42 direkt mit dem Abgas 32 in einem Abgaskanal einer Brennkammer im Abgaskrümmer 46 zusammengeführt und kann sich gut durchmischen. Der Massenstrom an Sekundärluft 40 durch die Sekundärluftleitung 38 ist mittels eines Ventil 48 steuerbar. Das Ventil 48 weist zusätzlich in dieser vorteilhaften Ausführungsform eine Rückschlagfunktion auf, so dass kein Massenstrom in der entgegengesetzten Strömungsrichtung die Sekundärluftleitung 38 passieren kann.

Die aufladbare Brennkraftmaschine 10 weist eine Steuereinheit 58, zum Beispiel ein Motorsteuergerät, auf. Die Steuereinheit 58 ist derart ausgebildet, dass einzelne Betriebsparameter der aufladbaren Brennkraftmaschine 10 steuerbar oder regelbar sind. Zu diesem Zweck steht sie in Wirkverbindung mit verschiedenen Stellgliedern für Stellgrößen zur Änderung von Betriebsparametern und/oder mit verschiedenen Sensoren zur Messung von Betriebsparametern. In der Figur 1 sind im Zusammenhang der Erfindung stehende Wirkverbindungen eingezeichnet. Die Menge an Sekundärluft 42 ist von der Steuereinheit 58 mittels des Ventils 48 steuerbar. Erfindungsgemäß ist die Steuereinheit 58 in der gezeigten Ausführungsform insbesondere derart ausgebildet, dass durch diese ein Kraftstoff-Luft-Verhältnis in den Brennkammern und/oder ein oder mehrere Zündwinkel und/oder ein oder mehrere Einspritzzeitpunkte des fremdgezündeten Verbrennungsmotors 12 steuerbar oder regelbar sind.

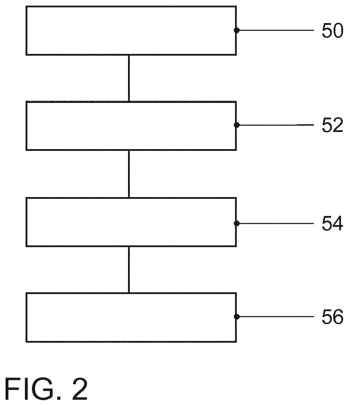

Die Figur 2 zeigt ein Ablaufdiagramm einer bevorzugten Ausführungsform des erfindungsgemäßen Verfahrens, insbesondere in einer aufladbaren Brennkraftmaschine gemäß der Figur 1. Das erfindungsgemäße Verfahren ermöglicht die Regeneration des Partikelfilters 30.

Im Schritt 50 wird die erfindungsgemäße aufladbare Brennkraftmaschine 10 in einem Betriebspunkt mit Teilllast betrieben. Dabei wird die aufladbare Brennkraftmaschine 10 mittels des Verdichters 18 aufgeladen. Es findet in diesem Schritt 50 keine Sekundärluftzufuhr statt.

Im Schritt 52 werden ein oder mehrere Zündwinkel und/oder ein oder mehrere Einspritzzeitpunkte an diesem Betriebspunkt nach spät verstellt. Im Schritt 54 wird Sekundärluft stromauf der Turbine 28 in die Abgasanlage 26 eingeleitet. Schritt 52 und Schritt 54 können auch in vertauschter Reihenfolge einsetzen oder ablaufen. Sie können auch wenigstens teilweise zeitlich parallel stattfinden.

Im Schritt 54 wird, indem die Sekundärluftzufuhr und/oder die Zündwinkel und/oder die Einspritzzeitpunkte und/oder die eingespritzte Menge an Kraftstoff gesteuert werden, die Temperatur in der Abgasanlage 26 am Partikelfilter 30 auf einen Wert größer als 500 Grad Celsius und kleiner als 1100 Grad Celsius erhöht.

Auf diese vorteilhafte Weise werden am Partikelfilter 30 die Bedingungen für seine thermische Regeneration geschaffen.

### BEZUGSZEICHENLISTE

- 10: aufladbare Brennkraftmaschine
- 12: fremdgezündeter Verbrennungsmotor
- 14: Frischgas
- 15: Luftfilter
- 16: Frischgasstrang
- 18: Verdichter
- 20: Ladeluftkühler
- 22: Drosselklappe
- 24: Saugrohr
- 26: Abgasanlage
- 28: Turbine
- 29: Turboladergruppe
- 30: Partikelfilter
- 32: Abgas
- 34: Bypass-Leitung
- 36: Bypass-Ventil
- 38: Sekundärluftleitung
- 40: Abzweigungsstelle
- 42: Sekundärluft
- 44: Mündungsstelle
- 46: Abgaskrümmer
- 48: Ventil mit Rückschlagfunktion
- 50: Betreiben in Teilllast
- 52: Spätverstellen des fremdgezündeten Verbrennungsmotors
- 54: Einleiten von Sekundärluft
- 56: Erhöhen der Temperatur im Partikelfilter
- 58: Steuerungseinheit
- 60: Fahrzeug

## Patentansprüche

1. Aufladbare Brennkraftmaschine (10) mit einem fremdgezündeten Verbrennungsmotor (12), einem Frischgasstrang (16) mit wenigstens einem Verdichter (18), einer Abgasanlage (26) mit wenigstens einer Turbine (28) und wenigstens einem Partikelfilter (30), welcher stromab der Turbine (28) angeordnet ist, und einer Sekundärluftleitung (38), welche stromab des Verdichters (18) vom Frischgasstrang (16) abzweigt und stromauf der Turbine (28) in einen Abgaskrümmer (46) der Abgasanlage (26) in die Abgasanlage (26) mündet,
**gekennzeichnet durch**
eine Steuereinheit (58), die derart ausgebildet ist, dass durch diese ein oder mehrere Zündwinkel und/oder ein oder mehrere Einspritzzeitpunkte des fremdgezündeten Verbrennungsmotors (12) steuerbar oder regelbar sind, und mehrere Mündungsstellen (44) der Sekundärluftleitung (38) in den Abgaskrümmer (46) der Abgasanlage (26), wobei der Abgaskrümmer (46) in den Zylinderkopf integriert ist.

2. Aufladbare Brennkraftmaschine (10) nach Anspruch 1,
**gekennzeichnet durch**
eine Steuereinheit (58), die derart ausgebildet ist, dass durch diese ein Kraftstoff-Luft-Verhältnis des fremdgezündeten Verbrennungsmotors (12) steuerbar oder regelbar sind.

3. Fahrzeug (60),
**gekennzeichnet durch**
eine aufladbare Brennkraftmaschine (10) gemäß einem der vorstehenden Ansprüche, wobei der Partikelfilter (30) im Unterboden des Fahrzeugs angeordnet ist.

4. Verfahren zum Betreiben einer aufladbaren Brennkraftmaschine (10) mit einem fremdgezündeten Verbrennungsmotor (12), einem Frischgasstrang (16) mit wenigstens einem Verdichter (18), einer Abgasanlage (26) mit wenigstens einer Turbine (28) und wenigstens einem Partikelfilter (30), welcher stromab der Turbine (28) angeordnet ist, und einer Sekundärluftleitung (38), welche stromab des Verdichters (18) vom Frischgasstrang (16) abzweigt und stromauf der Turbine (28) in einen Abgaskrümmer (46) der Abgasanlage (26) in die Abgasanlage (26) mündet, in welchem die aufladbare Brennkraftmaschine (10) mittels des Verdichters (18) aufgeladen wird und Sekundärluft stromauf der Turbine (28) in den Abgaskrümmer (46) eingeleitet wird,
**dadurch gekennzeichnet**
**dass** ein oder mehrere Zündwinkel und/oder ein oder mehrere Einspritzzeitpunkte im Vergleich zum Betrieb am gleichen Betriebspunkt ohne Sekundärluftzufuhr nach spät verstellt werden oder sind und die Sekundärluft an mehreren Mündungspunkten (44) in den Abgaskrümmer (46), welcher in den Zylinderkopf integriert ist, eingeleitet wird.

5. Verfahren zum Betreiben einer aufladbaren Brennkraftmaschine (10) nach Anspruch 4,
**dadurch gekennzeichnet**
**dass** die aufladbare Brennkraftmaschine (10) in einem Betriebspunkt mit Teilllast und/oder mit einem unterstöchiometrischen Kraftstoff-Luft-Verhältnis betrieben wird.

6. Verfahren zum Betreiben einer aufladbaren Brennkraftmaschine (10) nach einem der Ansprüche 4 oder 5,
**dadurch gekennzeichnet**
**dass** die Temperatur in der Abgasanlage (26) am Partikelfilter (30) auf einen Wert größer als 500 Grad Celsius und kleiner als 1100 Grad Celsius erhöht wird.

7. Verfahren zum Betreiben einer aufladbaren Brennkraftmaschine (10) nach einem der Ansprüche 4 bis 6,
**dadurch gekennzeichnet**
**dass** die Steuerung oder Regelung derart vorgenommen wird, dass in der Abgasanlage (26) nach der Beimischung der Ladeluft über die Sekundärluftleitung ein stöchiometrisches Kraftstoff-Luft-Verhältnis erreicht wird.

8. Verfahren zum Betreiben einer aufladbaren Brennkraftmaschine (10) nach einem der Ansprüche 4 bis 7,
**dadurch gekennzeichnet**
**dass** die Leistungsabgabe der Turbine (28) und/oder des Verdichters (18) im Vergleich zum Betrieb am gleichen Betriebspunkt ohne Sekundärluftzufuhr erhöht wird.

9. Verfahren zum Betreiben einer aufladbaren Brennkraftmaschine (10) nach einem der Ansprüche 4 bis 8,
**dadurch gekennzeichnet**
**dass** ein Ladedruck und/oder ein Luftmassenstrom zum fremdgezündeten Verbrennungsmotor (12) erhöht wird.

10. Verfahren zum Betreiben einer aufladbaren Brennkraftmaschine (10) nach einem der Ansprüche 4 bis 9,
**dadurch gekennzeichnet**
**dass** der Abgaskrümmer (46) kühlbar ist und die Kühlung des Abgases im gekühlten Abgaskrümmer (46) in bestimmten Betriebspunkten verringert oder unterlassen wird.

## Claims

1. Superchargeable internal combustion engine (10) having an applied-ignition internal combustion engine (12), having a fresh-gas tract (16) with at least one compressor (18), having an exhaust system (26) with at least one turbine (28), and having at least one particle filter (30) which is arranged downstream of the turbine (28), and having a secondary air line (38) which branches off from the fresh-gas tract (16) downstream of the compressor (18) and opens into the exhaust system (26), in an exhaust manifold (46) of the exhaust system (26), upstream of the turbine (28),
**characterized by**
a control unit (58) which is configured such that one or more ignition angles and/or one or more injection times of the applied-ignition internal combustion engine (12) are controllable in open-loop or closed-loop fashion by means of said control unit, and multiple opening points (44) of the secondary air line (38) into the exhaust manifold (46) of the exhaust system (26), wherein the exhaust manifold (46) is integrated into the cylinder head.

2. Superchargeable internal combustion engine (10) according to Claim 1,
**characterized by**
a control unit (58) which is configured such that a fuel-air ratio of the applied-ignition internal combustion engine (12) is controllable in open-loop or closed-loop fashion by means of said control unit.

3. Vehicle (60),
**characterized by**
a superchargeable internal combustion engine (10) as claimed in one of the preceding claims, wherein the particle filter (30) is arranged in the underbody region of the vehicle.

4. Method for operating a superchargeable internal combustion engine (10) having an applied-ignition internal combustion engine (12), having a fresh-gas tract (16) with at least one compressor (18), having an exhaust system (26) with at least one turbine (28), and having at least one particle filter (30) which is arranged downstream of the turbine (28), and having a secondary air line (38) which branches off from the fresh-gas tract (16) downstream of the compressor (18) and opens into the exhaust system (26), in an exhaust manifold (46) of the exhaust system (26), upstream of the turbine (28), in which method the superchargeable internal combustion engine (10) is supercharged by means of the compressor (18), and secondary air is introduced into the exhaust manifold (46) upstream of the turbine (28),
**characterized**
**in that** one or more ignition angles and/or one or more injection times are retarded in relation to operation at the same operating point without a feed of secondary air, and the secondary air is introduced at multiple opening points (44) into the exhaust manifold (46), which is integrated into the cylinder head.

5. Method for operating a superchargeable internal combustion engine (10) according to Claim 4,
**characterized**
**in that** the superchargeable internal combustion engine (10) is operated as an operating point with part load and/or with a substoichiometric fuel-air ratio.

6. Method for operating a superchargeable internal combustion engine (10) according to either of Claims 4 and 5,
**characterized**
**in that** the temperature in the exhaust system (26) at the particle filter (30) is increased to a value higher than 500° Celsius and lower than 1100° Celsius.

7. Method for operating a superchargeable internal combustion engine (10) according to one of Claims 4 to 6,
**characterized**
**in that** the open-loop or closed-loop control is performed such that a stoichiometric fuel-air ratio is achieved in the exhaust system (26) after the admixing of the charge air via the secondary air line.

8. Method for operating a superchargeable internal combustion engine (10) according to one of Claims 4 to 7,
**characterized**
**in that** the power output of the turbine (28) and/or of the compressor (18) is increased in relation to operation at the same operating point without a feed of secondary air.

9. Method for operating a superchargeable internal combustion engine (10) according to one of Claims 4 to 8,
**characterized**
**in that** a charge pressure and/or an air mass flow to the applied-ignition internal combustion engine (12) is increased.

10. Method for operating a superchargeable internal combustion engine (10) according to one of Claims 4 to 9,
**characterized**
**in that** the exhaust manifold (46) is coolable, and the cooling of the exhaust gas in the cooled exhaust manifold (46) is reduced or stopped at certain operating points.

## Revendications

1. Moteur à combustion interne pouvant être suralimenté (10) avec un moteur à combustion (12) à allumage commandé, une ligne de gaz frais (16) avec au moins un compresseur (18), un système de gaz d'échappement (26) avec au moins une turbine (28) et au moins un filtre à particules (30), qui est disposé en aval de la turbine (28), et une conduite d'air secondaire (38), qui part de la ligne de gaz frais (16) en aval du compresseur (18) et débouche en amont de la turbine (28) dans un collecteur d'échappement (46) du système d'échappement (26) dans le système de gaz d'échappement (26), **caractérisé par** une unité de commande (58), qui est configurée de telle manière qu'il soit possible avec celle-ci de commander ou de réguler un ou plusieurs angle(s) d'allumage et/ou un ou plusieurs instant(s) d'injection du moteur à combustion à allumage commandé (12), et par plusieurs embouchures (44) de la conduite d'air secondaire (38) dans le collecteur d'échappement (46) du système d'échappement (26), dans lequel le collecteur d'échappement (46) est intégré dans la culasse.

2. Moteur à combustion interne pouvant être suralimenté (10) selon la revendication 1, **caractérisé par** une unité de commande (58), qui est configurée de telle manière qu'il soit possible avec celle-ci de commander ou de réguler un rapport carburant-air du moteur à combustion à allumage commandé (12).

3. Véhicule (60), **caractérisé par** un moteur à combustion interne pouvant être suralimenté (10) selon l'une quelconque des revendications précédentes, dans lequel le filtre à particules (30) est disposé dans le plancher du véhicule.

4. Procédé de fonctionnement d'un moteur à combustion interne pouvant être suralimenté (10) avec un moteur à combustion à allumage commandé (12), une ligne de gaz frais (16) avec au moins un compresseur (18), un système d'échappement (26) avec au moins une turbine (28) et au moins un filtre à particules (30), qui est disposé en aval de la turbine (28), et une conduite d'air secondaire (38), qui part de la ligne de gaz frais (16) en aval du compresseur (18) et débouche en amont de la turbine (28) dans un collecteur d'échappement (46) du système d'échappement (26) dans le système d'échappement (26), dans lequel le moteur à combustion interne pouvant être suralimenté (10) est suralimenté au moyen du compresseur (18) et de l'air secondaire est introduit dans le collecteur d'échappement (46) en amont de la turbine (28), **caractérisé en ce que** l'on règle ou on a réglé en retard un ou plusieurs angle(s) d'allumage et/ou un ou plusieurs instant(s) d'injection par comparaison avec le fonctionnement au même point de fonctionnement sans apport d'air secondaire et on introduit l'air secondaire par différentes embouchures (44) dans le collecteur d'échappement (46), qui est intégré dans la culasse.

5. Procédé de fonctionnement d'un moteur à combustion interne pouvant être suralimenté (10) selon la revendication 4, **caractérisé en ce que** l'on fait fonctionner le moteur à combustion interne pouvant être suralimenté (10) avec un point de fonctionnement à charge partielle et/ou avec un rapport carburant-air sous-stoechiométrique.

6. Procédé de fonctionnement d'un moteur à combustion interne pouvant être suralimenté (10) selon une des revendications 4 ou 5, **caractérisé en ce que** l'on augmente la température dans le système d'échappement (26) au filtre à particules (30) à une valeur supérieure à 500 degrés Celsius et inférieure à 1100 degrés Celsius.

7. Procédé de fonctionnement d'un moteur à combustion interne pouvant être suralimenté (10) selon une des revendications 4 à 6, **caractérisé en ce que** l'on opère la commande ou la régulation de telle manière qu'un rapport stoechiométrique carburant-air soit atteint dans le système d'échappement (26) après l'ajout de l'air de suralimentation par la conduite d'air secondaire.

8. Procédé de fonctionnement d'un moteur à combustion interne pouvant être suralimenté (10) selon une des revendications 4 à 7, **caractérisé en ce que** l'on augmente la production de puissance de la turbine (28) et/ou du compresseur (18) par comparaison avec le fonctionnement au même point de fonctionnement sans apport d'air secondaire.

9. Procédé de fonctionnement d'un moteur à combustion interne pouvant être suralimenté (10) selon une des revendications 4 à 8, **caractérisé en ce que** l'on augmente une pression de suralimentation et/ou un débit massique d'air vers le moteur à combustion à allumage commandé (12) .

10. Procédé de fonctionnement d'un moteur à combustion interne pouvant être suralimenté (10) selon une des revendications 4 à 9, **caractérisé en ce que** le collecteur d'échappement (46) peut être refroidi et on réduit ou on omet le refroidissement du gaz d'échappement dans le collecteur d'échappement refroidi (46) en certains points de fonctionnement.
